# FASCICULE DE BREVET EUROPEEN

(11) **EP 3 856 587 B1**
(45) Date de publication et mention de la délivrance du brevet: **28.02.2024**
(21) Numéro de dépôt: 19773099.7
(22) Date de dépôt: 25.09.2019
(51) Int. Cl.: B60S 1/56, B60S 1/52

(54) **DISPOSITIF DE NETTOYAGE D'UN CAPTEUR D'AIDE A LA CONDUITE D'UN VEHICULE AUTOMOBILE**
VORRICHTUNG ZUR REINIGUNG EINES FAHRERASSISTENZSENSORS EINES KRAFTFAHRZEUGS
DEVICE FOR CLEANING A DRIVER ASSISTANCE SENSOR OF A MOTOR VEHICLE

(30) Priorité: 28.09.2018 FR 1858954
(43) Date de publication de la demande: 04.08.2021
(73) Titulaire: Valeo Systèmes d'Essuyage, 78322 Le Mesnil Saint Denis (FR)
(72) Inventeur: TREBOUET, Marcel, 78322 Le Mesnil Saint Denis (FR)
(74) Mandataire: Valeo Visibility
(86) Numéro de dépôt international: PCT/EP2019/075944
(87) Numéro de publication internationale: WO 2020/064883

(56) Documents cités:
- EP-A1- 3 309 019
- WO-A1-2018/017395
- US-A1- 2018 265 049

## Description

La présente invention concerne le domaine des systèmes d'aide à la conduite, et plus particulièrement des dispositifs de nettoyages dédiés aux modules de détection de tels systèmes d'aide à la conduite.

Les véhicules, et particulièrement les véhicules automobiles, comprennent de plus en plus de systèmes automatisés, qui sont notamment des systèmes d'aide à la conduite. De tels systèmes d'aide à la conduite comprennent notamment un ou plusieurs module(s) de détection d'un environnement du véhicule et de paramètres externes à ce véhicule ainsi qu'au moins une unité de contrôle configurée pour interpréter les informations ainsi recueillies et pour prendre les décisions qui s'imposent en conséquence de ces informations.

Dès lors, on comprend qu'il est particulièrement important d'assurer le bon fonctionnement de ces modules de détection, tout au long de la vie du véhicule. Notamment, ces modules de détection sont, le plus souvent, agencés à l'extérieur du véhicule, par exemple portés par la carrosserie de ce véhicule, et peuvent par exemple être salis, ce qui peut rendre difficile, voire impossible, l'acquisition d'informations par ces modules de détection. Il faut donc prévoir un système de nettoyage capable de retirer efficacement les détritus, salissures, éléments organiques et autres éléments perturbateurs qui peuvent se déposer et gêner l'acquisition d'images par ces modules de détection. Une solution connue est de projeter du fluide lave glace en quantité sur une surface optique du module de détection concerné puis de sécher cette surface, mais il convient de noter qu'une telle solution peut être coûteuse en fluide lave glace, ou en eau, si la projection est fait massivement sans stratégie particulière, d'autant plus dans le cas de véhicule autonome où de nombreux modules de détection sont mis en oeuvre sur le pourtour du véhicule.

Par ailleurs, il convient de noter que la projection de fluide lave glace rend inopérant le module de détection, ou à tout le moins dégrade la fonction optique de ce module de détection pendant le nettoyage. Or, dans le cas d'un véhicule autonome, le pilotage du véhicule est basé sur les informations détectées ce qui implique une grande qualité des images détectées. Les modules de détection sont ainsi disposés de manière redondante, c'est-à-dire de manière à ce que lorsqu'un module de détection est inopérant ou fonctionne dans un mode dégradé, un autre module puisse assurer la détection d'une image correspondante.

Le document EP3309019 décrit un système de lavage pour laver une surface d'une pièce telle qu'une pièce de véhicule automobile.

Le document WO2018017395 décrit un système de nettoyage de capteurs pour véhicules.

La présente invention s'inscrit dans ce contexte et vise à proposer un dispositif de nettoyage d'un module de détection à large surface optique d'un système d'aide à la conduite d'un véhicule automobile, comprenant au moins deux rampes de projection d'un fluide nettoyant agencées autour du module de détection à large surface optique, chaque rampe de projection étant configurée pour assurer le nettoyage d'une partie de la surface optique du module de détection, chaque rampe de projection étant activable indépendamment des autres rampes de projection.

On entend par « module de détection à large surface optique », un module configuré pour acquérir des images d'un environnement qui l'entoure, avec une ouverture du champ de vision de l'ordre d'au moins 180°. Par exemple ce module de détection peut consister en un émetteur/récepteur d'un faisceau lumineux, le module de détection prenant la forme d'un module LIDAR (acronyme de l'expression anglaise « Light Détection And Ranging »), susceptible de récupérer des informations tout autour de lui pour construire une image à 360°. Un tel module de détection peut comprendre un ou plusieurs capteur(s) à grande portée, configuré(s) pour faire de la reconstitution d'images suite à une émission/réception d'ondes.

On entend par « activable séparément » le fait que l'ensemble des étapes permettant la projection de fluide nettoyant par la rampe de projection concernée peut être réalisé par une rampe de projection pour le nettoyage d'une partie de la surface optique sans que soit déclenchée une opération de nettoyage via une autre rampe de projection. Avantageusement, l'indépendance de ces rampes de projection permet de ne jamais nettoyer simultanément l'ensemble de la surface optique du module de détection. Tel que cela a été évoqué précédemment, en cours de nettoyage, l'acquisition d'images par le module de détection est gênée, voire totalement empêchée. Nettoyer l'ensemble du module de détection en une seule étape reviendrait alors à aveugler le véhicule équipé d'un tel module de détection, ce qui peut s'avérer dangereux pour la sécurité des occupants des véhicules et également des autres usagers de la route en situation de conduite. La présente invention permet ainsi de maintenir la fonction d'acquisition d'images, au moins partielle, par le module de détection, tout en en assurant le nettoyage puisque, lorsque des salissures, déchets organiques ou autres détritus se déposent sur le module de détection, l'acquisition d'images peut également être perturbée, voire empêchée.

Selon la présente invention, le dispositif de nettoyage présente une forme annulaire, avec chaque rampe de projection qui présente une forme de portion d'anneau. On comprend que cette forme annulaire est particulièrement avantageuse lorsque le module de détection associé aux rampes de projection présente une surface optique formant un cylindre de révolution ou une portion de cylindre.

Selon l'invention, chaque rampe de projection comprend au moins deux buses de projection de fluide. Le nombre et la disposition des buses le long de la rampe permet de maitriser la projection de fluide - liquide ou air pulsé - sur la surface à nettoyer.

Selon la présente invention, chaque rampe de projection est montée sur un dispositif de déploiement télescopique, de manière à pouvoir prendre au moins une première position escamotée et au moins une deuxième position déployée. La deuxième position déployée correspond à une position dans laquelle les buses de projection sont dégagée de la carrosserie du véhicule et en regard de la surface optique du module de détection, permettant ainsi la projection de fluide, et la position escamotée est quant à elle une position de repos qui permet l'acquisition d'images par le module de détection sans que la rampe soit dans le champ de vision du module de détection.

Selon une caractéristique de la présente invention, le passage de la première position escamotée à la deuxième position déployée de chaque rampe de projection est piloté par un dispositif de déploiement qui lui est propre. Par exemple, au moins un dispositif de déploiement est un dispositif de déploiement hydraulique. Avantageusement, tous les dispositifs de déploiement sont des dispositifs de déploiement hydrauliques. On comprend que l'utilisation d'un dispositif de déploiement hydraulique peut non seulement permettre de projeter le fluide pour nettoyer le module de détection mais également permettre le déploiement des rampes de projection, le cas échéant avec le même fluide, c'est-à-dire le fluide nettoyant. Alternativement, au moins un dispositif de déploiement, avantageusement tous les dispositifs de déploiement, est/sont un/des dispositif(s) de déploiement pneumatique(s).

L'invention concerne également un système d'aide à la conduite, comprenant au moins un module de détection à large surface optique, configuré pour opérer une acquisition d'images selon un champ angulaire d'au moins 180° et notamment à 360° et au moins un dispositif de nettoyage selon l'invention, le dispositif de nettoyage étant dédié au nettoyage du module de détection avec chaque rampe de projection du dispositif de nettoyage qui est dédiée au nettoyage d'un secteur angulaire du module de détection. Selon un exemple de réalisation de la présente invention, tous les secteurs angulaires nettoyés par une rampe de projection du dispositif de nettoyage sont identiques. Autrement dit, si le module de détection à large surface optique est un module apte à détecter une image à 360° et que le dispositif de nettoyage comprend trois rampes de projection, alors chaque rampe de projection assure le nettoyage d'un secteur angulaire de 120°.

Selon une caractéristique de la présente invention, au moins un secteur angulaire du module de détection est dédié à l'acquisition d'images concernant une scène de route se déroulant à l'avant du véhicule auquel est destiné le système d'aide à la conduite, ce secteur angulaire étant centré sur un axe longitudinal d'avancement du véhicule. Le terme « avant du véhicule » doit ici être entendu par rapport à un sens de déplacement du véhicule le long de l'axe longitudinal d'avancement.

Selon un exemple de réalisation de la présente invention, le module de détection comprend au moins un organe de détection par émission d'ondes. On entend par « organe de détection par émission d'ondes » un organe configuré pour déterminer une distance le séparant d'un objet quelconque en émettant au moins une onde et en mesurant le délai de retour de cette onde. Autrement dit, la distance est calculée par la mesure du délai entre l'émission de l'onde et la détection d'une réflexion de cette onde par l'objet concerné. Ainsi, à partir du délai mesuré et de la vitesse théorique de propagation de l'onde, l'organe de détection est configuré pour déterminer la distance le séparant de l'objet sur lequel l'onde a été réfléchie. Il peut par exemple s'agir d'ondes lumineuses, ou d'ondes électromagnétiques. Dans la description les termes « organe de détection » et « organe de détection par émission d'ondes » sont utilisés sans distinction.

La présente invention concerne en outre un véhicule automobile comprenant au moins un système d'aide à la conduite selon l'invention.

La présente invention concerne enfin un procédé de nettoyage d'un système d'aide à la conduite selon l'invention, comprenant au moins une étape au cours de laquelle une unité de contrôle reçoit une information concernant une demande de nettoyage d'au moins un secteur angulaire du module de détection, au moins une étape au cours de laquelle l'unité de contrôle envoie une requête pour s'assurer que les autres secteurs angulaires du module de détection sont opérationnels, au moins une étape au cours de laquelle l'unité de contrôle renvoie une première instruction permettant de passer la rampe de projection dédiée au nettoyage du secteur angulaire concerné de sa position escamotée à sa position déployée, au moins une étape au cours de laquelle l'unité de contrôle envoie une deuxième instruction entrainant une projection d'un fluide par la rampe de projection concernée et au moins une étape au cours de laquelle l'unité de contrôle envoie une troisième instruction permettant le passage de la rampe de projection en question de sa position déployée à sa position escamotée.

Il est en outre entendu que la projection de fluide nettoyant est réalisée par les buses de projection intégrées à chaque rampe de projection. Selon l'invention la projection de fluide peut également être amorcée lors du déploiement de la rampe de projection concernée, c'est-à-dire lors de son passage de sa première position escamotée à sa deuxième position déployée.

En référence à ce qui précède, lorsque les dispositifs de déploiement sont des dispositifs de déploiement hydrauliques et que leur déploiement est réalisé grâce à une injection de fluide nettoyant, on comprend que la première instruction et la deuxième instruction envoyées par l'unité de contrôle sont confondues.

D'autres détails, caractéristiques et avantages ressortiront plus clairement à la lecture de la description détaillée donnée ci-après, à titre indicatif, en relation avec les différents exemples de réalisation illustrés sur les figures suivantes :
- la figure 1 illustre de façon schématique, vue de dessus, un véhicule automobile équipé d'un système d'aide à la conduite selon l'invention, ce système d'aide à la conduite comprenant au moins un module de détection et un dispositif de nettoyage selon un aspect de l'invention associé à ce module de détection ;
- la figure 2 est une vue de dessus du dispositif de nettoyage du système d'aide à la conduite illustré sur la figure 1 ;
- la figure 3 illustre, en perspective, le système d'aide à la conduite selon l'invention dans une situation où le dispositif de nettoyage du module de détection est mis en oeuvre, la figure 3 permettant de rendre visible des moyens d'actionnement de rampes de projection du dispositif de nettoyage ;
- la figure 4 représente, sous forme synoptique, un procédé de nettoyage mis en oeuvre par le système d'aide à la conduite selon l'invention.

Dans la suite de la description les termes «longitudinal», «transversal» et «vertical» se réfèrent à une orientation d'un système d'aide à la conduite 100 selon l'invention lorsque celui-ci est intégré à un véhicule automobile 300. Ainsi, le terme «longitudinal» correspond à une direction parallèle à un axe d'avancement principal du véhicule et à un axe longitudinal L d'un trièdre L, V, T représenté sur les figures, le terme « transversal » correspond à une direction parallèle à un axe transversal T de ce trièdre, l'axe transversal étant perpendiculaire à l'axe longitudinal L et le terme «vertical» correspond à une direction parallèle à un axe vertical V du trièdre, cet axe vertical V étant perpendiculaire à l'axe longitudinal L et à l'axe transversal T. Les termes «inférieur», «supérieur», «haut» et «bas» se réfèrent à des positions relatives le long de l'axe vertical V, une partie inférieure ou basse du véhicule étant par exemple les roues de ce dernier et une partie supérieure ou haute de ce véhicule étant par exemple formée par le toit de ce véhicule.

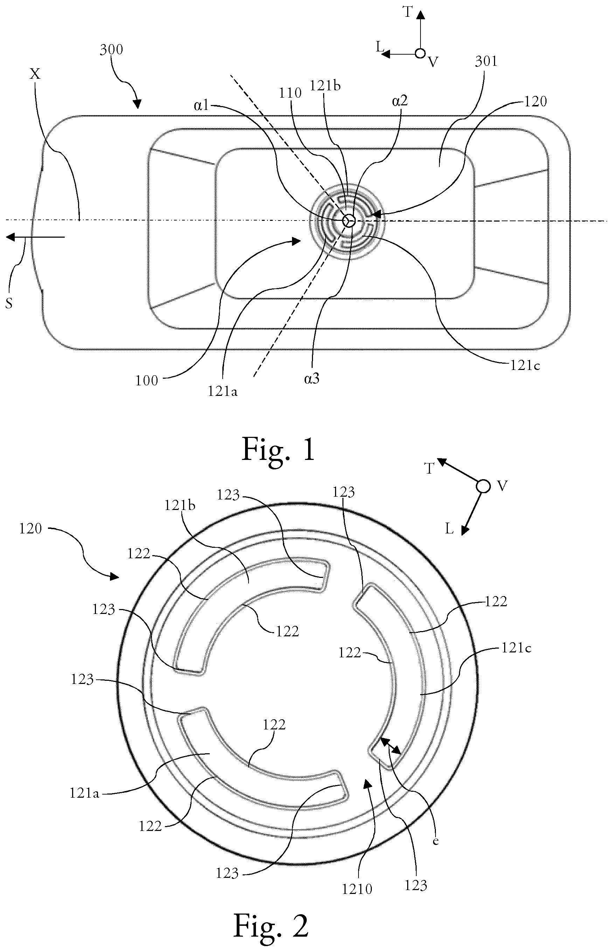

La figure 1 est une vue, de dessus, d'un véhicule automobile 300 comprenant au moins un système d'aide à la conduite 100 selon l'invention. Plus particulièrement, selon l'exemple illustré ici, le système d'aide à la conduite 100 est positionné sur un toit 301 du véhicule automobile 300. Tel que cela sera plus amplement détaillé ci-après, ce système d'aide à la conduite 100 comprend au moins un module de détection 110 configuré pour acquérir des images à au moins 180°, ici à 360°, d'un environnement du véhicule 300. Autrement dit, ce module de détection 110 est configuré pour acquérir des images de l'ensemble de l'environnement du véhicule 300.

Le positionnement de ce module de détection 110 à l'extérieur du véhicule 300 l'expose à des salissures, des éléments organiques ou tout autre détritus. Aussi, afin de permettre à ce module de détection 110 de fonctionner de façon optimale, il convient de nettoyer régulièrement sa surface optique directement au contact de ces salissures et autres détritus. A cette fin, le système d'aide à la conduite 100 selon l'invention comprend également un dispositif de nettoyage 120 de ce module de détection 110. Selon un exemple illustré sur les figures, le dispositif de nettoyage 120 comprend trois rampes de projection 121a, 121b, 121c, chacune dédiée au nettoyage d'un secteur angulaire α1, α2, α3 de la surface optique du module de détection 110. Ainsi, une première rampe de projection 121a est dédiée au nettoyage d'un premier secteur angulaire α1, une deuxième rampe de projection 121b est dédiée au nettoyage d'un deuxième secteur angulaire α2 et une troisième rampe de projection 121c est dédiée au nettoyage d'un troisième secteur angulaire α3.

Tel que cela sera détaillé ci-dessous, le nettoyage d'un secteur angulaire du module de détection 110 perturbe, voir empêche complètement, l'acquisition d'images par ce secteur angulaire précis. Aussi, la présente invention est conçue pour permettre un nettoyage sélectif, par secteur angulaire, de ce module de détection 110, de sorte que l'acquisition d'images, au moins partielle, puisse être réalisée en permanence par le module de détection. La présente invention permet ainsi d'éviter un aveuglement total du module de détection 110 qui pourrait être dangereux pour la sécurité des occupants du véhicule 300 équipé du système d'aide à la conduite 100 selon l'invention, mais également pour les autres usagers qui partagent la route avec ce véhicule 300.

Tel que représenté sur la figure 1, chaque secteur angulaire α1, α2, α3 du module de détection 110 est identique aux deux autres. Autrement dit, selon l'exemple illustré d'un module de détection dont la surface optique permet une prise de vue à 360°, chaque secteur angulaire α1, α2, α3 présente une ouverture de 120°. Selon cet exemple, le premier secteur angulaire α1 est dédié à l'acquisition d'images d'une scène de route située à l'avant du véhicule 300, le deuxième secteur angulaire α2 et le troisième secteur angulaire α3 étant quant à eux dédiés à l'acquisition d'images de scènes de route situées latéralement et à l'arrière du véhicule, chacun de ces deuxième et troisième secteurs angulaires α2, α3 étant dédié à un côté défini du véhicule 300. Tel qu'illustré, le premier secteur angulaire α1 est centré sur un axe X d'avancement du véhicule 300.

Les termes « avant » et « arrière » du véhicule 300 s'entendent ici par rapport à un sens S de déplacement principal du véhicule le long de l'axe X d'avancement de ce véhicule 300.

Alternativement, on pourra par exemple prévoir de diviser le module de détection en plus de trois secteurs angulaires, par exemple en quatre secteurs angulaires de 90° chacun, auquel cas le dispositif de nettoyage comprendra quatre rampes de projection, chacune d'entre elles étant dédiée au nettoyage de l'un de ces secteurs angulaires.

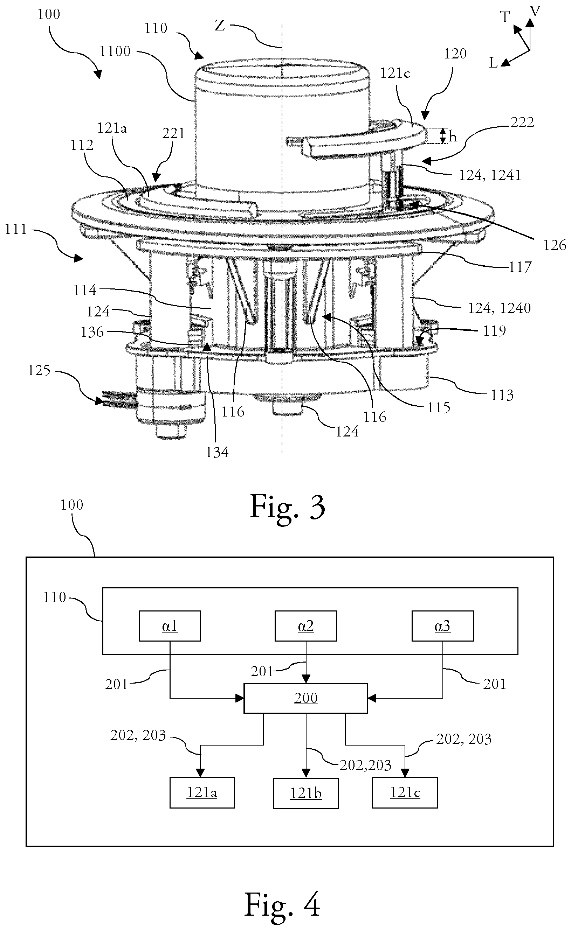

En référence aux figures 2 et 3 nous allons maintenant décrire plus en détails le système d'aide à la conduite 100 selon l'invention, la figure 2 étant une vue de dessus du dispositif de nettoyage 120 de ce système d'aide à la conduite 100 et la figure 3 étant une vue en perspective du système d'aide à la conduite 100 dans son ensemble, c'est-à-dire du module de détection 110 et du dispositif de nettoyage 120 associé à ce module de détection 110.

Tel que particulièrement visible sur la figure 2, le dispositif de nettoyage 120 selon l'invention présente une forme générale annulaire avec les rampes de projection qui forment ce dispositif de nettoyage qui présentent chacune une forme de portion d'anneau. En d'autres termes, chaque rampe de projection 121a, 121b,121c est délimitée par deux bords 122 en forme d'arcs de cercle reliés entre eux par deux bords droits 123 et présente une épaisseur e supérieure à une hauteur h - par exemple illustré sur la figure 3 - de cette même rampe de projection 121. Tel que représenté, l'épaisseur e de chaque rampe de projection 121a, 121b, 121c est mesurée radialement entre les deux bords 122 en forme d'arcs de cercle et parallèlement à l'un des bords droits 123 de la rampe de projection 121a, 121b,121c concernée et la hauteur h de chacune de ces rampes de projection 121a, 121b, 121c est mesurée parallèlement à l'axe vertical V du trièdre illustré, c'est-à-dire parallèlement à la direction de déplacement télescopique de la rampe de projection. 121a, 121b, 121c

Chacune de ces rampes de projection 121a, 121b, 121c comprend au moins deux buses de projection - non illustrées ici - configurées pour projeter le fluide nettoyant destiné au lavage du secteur angulaire auquel est dédiée la rampe de projection 121a, 121b, 121c concernée. Tel que représenté, chaque rampe de projection 121a, 121b, 121c ne s'étend que sur une portion du secteur angulaire auquel elle est dédiée. Toutefois, les buses de projection de chacune de ces rampes de projection 121a, 121b, 121c sont ménagées de sorte à couvrir l'ensemble du secteur angulaire auquel est dédiée la rampe de projection concernée, c'est-à-dire de sorte à ce que du fluide nettoyant soit projeté sur l'ensemble du secteur angulaire concerné. On entend par « projection de fluide nettoyant sur l'ensemble du secteur angulaire » une projection de fluide nettoyant sur la surface optique du module de détection configurée pour permettre l'acquisition d'images dans le secteur angulaire concerné. On comprend que cet agencement des buses permet ainsi de couvrir l'ensemble des secteurs angulaires tout en laissant un espace 1210 entre les rampes de projection 121a, 121b, 121c afin de permettre leur déploiement respectif sans entraves.

Tel que décrit ci-dessus, chaque rampe de projection 121a, 121b, 121c du dispositif de nettoyage 120 est dédiée au nettoyage d'un secteur angulaire du module de détection 110. Afin de permettre au module de détection 110 d'acquérir des images de son environnement hors des phases de nettoyage sans que les rampes de projection soient dans le champ de vision du module de détection, les rampes de projection 121a, 121b, 121c sont mobiles entre une première position escamotée dans laquelle l'acquisition d'images est possible et une deuxième position déployée, dans laquelle le nettoyage peut être effectué. Ces deux positions sont par exemple illustrées sur la figure 3 et sont plus amplement décrites ci-dessous.

La figure 3 illustre, en perspective, le module de détection 110 et le dispositif de nettoyage 120 dédié au nettoyage de ce module de détection 110. Selon l'invention, le module de détection 110 présente ici une forme cylindrique droite, d'axe de révolution Z parallèle à l'axe vertical V du trièdre et il comprend une surface optique 1110 entourant un organe de détection par émission d'ondes, c'est-à-dire un organe de détection configuré pour évaluer une distance le séparant d'un objet quelconque en mesurant un délai entre un instant t auquel il envoie une onde et un instant t1 auquel cette onde est réfléchie. Ainsi, cet organe de détection comprend au moins un organe émetteur configuré pour émettre au moins une onde et au moins un organe récepteur configuré pour recevoir l'onde réfléchie, ni l'organe émetteur, ni l'organe récepteur n'étant visible sur les figures. Selon différents exemples de réalisation de la présente invention, l'organe de détection peut être un système RADAR, acronyme anglo-saxon pour « RAdio Détection And Ranging », apte à transmettre et recevoir des ondes électromagnétiques, ou bienêtre un système LIDAR, acronyme anglo-saxon pour « LIght Détection And Ranging », apte à transmettre et recevoir des ondes lumineuses, par exemple un faisceau laser. Selon l'exemple illustré sur les figures, le module de détection 110 est un système LIDAR, et la surface optique 1100 du module de détection 110 est configurée pour permettre la transmission des ondes lumineuses l'acquisition d'images mentionnée ci-dessus est formée par une lentille apte à mettre en forme les ondes lumineuses.

Selon un exemple non illustré ici, le module de détection peut comprendre plusieurs organes de détection qui peuvent être identiques, ou non.

La figure 3 illustre en outre la première rampe de projection 121a dans sa première position 221 escamotée, c'est-à-dire une position dans laquelle cette première rampe de projection 121a est située en dehors d'un trajet emprunté par les ondes émises par le module de détection 110, et la troisième rampe de projection 121c dans sa deuxième position 222 déployée, c'est-à-dire une position dans laquelle cette troisième rampe de projection 121c est apte à projeter du fluide nettoyant sur la surface optique 1110 de sorte à nettoyer le secteur angulaire concerné.

Il apparaît clairement sur cette figure 3 que lorsqu'une rampe de projection 121c est dans sa deuxième position 222 déployée, elle est agencée en travers du trajet emprunté par les ondes émises par le module de détection 110, de sorte que le module de détection 110 ne peut plus acquérir de données complètes sur son environnement. Tel que cela sera détaillé ci-dessous, chaque rampe de projection 121a, 121b, 121c est pilotée indépendamment des deux autres, de sorte que seule une rampe de projection puisse prendre une position déployée, tel qu'illustré sur la figure 3. Ainsi, on s'assure que le module de détection 110 puisse continuer à acquérir des images sur au moins un secteur angulaire, avantageusement deux secteurs angulaires, même en cours de nettoyage. Autrement dit, le système d'aide à la conduite 100 selon l'invention permet une acquisition d'images continue, ce système d'aide à la conduite 100 étant ainsi particulièrement adapté à être intégré à un véhicule autonome ou partiellement autonome.

Afin de passer de leur première position 221 escamotée à leur deuxième position 222 déployée, les rampes de projection 121a, 121b, 121c sont télescopiques, c'est-à-dire qu'elles comprennent, chacune, un dispositif de déploiement 124 configuré pour s'allonger ou se replier le long d'une droite verticale parallèle à la direction verticale Z d'extension principale du module de détection 110. Dans la suite de la description, le phénomène d'allongement du dispositif de déploiement 124, mis en oeuvre lorsque l'on souhaite déplacer le dispositif de projection vers la position déployée, sera désigné comme « déploiement du dispositif de déploiement » et le phénomène de repli de ce dispositif de déploiement, mis en oeuvre lorsqu'on souhaite déplacer le dispositif de projection vers la position escamotée, sera désigné comme « repli du dispositif de déploiement ».

Chaque dispositif de déploiement 124 comporte un tube 1240 de guidage d'un piston 1241 apte à se déplacer en translation à l'intérieur du tube, la rampe de projection 121a, 121b, 121c associée à chaque dispositif de déploiement étant montée en bout du piston.

Les dispositifs de déploiement 124 peuvent par exemple être des dispositifs de déploiement hydrauliques, c'est-à-dire des dispositifs configurés pour que le piston et la rampe associée se déploient sous l'effet d'une pression hydraulique. Ainsi, chacun de ces dispositifs de déploiement 124 comprend au moins une arrivée 125 de liquide, cette arrivée 125 de liquide comprenant au moins un moyen d'obturation pilotable, non visible sur les figures. Selon l'invention, les moyens d'obturation pilotables de chacune des arrivée 125 de liquide sont pilotables indépendamment des uns des autres. Autrement dit, le déploiement de chaque dispositif de déploiement 124 est piloté indépendamment du déploiement des autres dispositifs de déploiement 124. Ainsi, chaque rampe de projection 121a, 121b, 121c peut passer de sa première position 221 escamotée à sa deuxième position 222 déployée indépendamment des autres. En d'autres termes, la présente invention permet un nettoyage ciblé et individualisé de chaque secteur angulaire du module de détection 110.

Avantageusement, le liquide permettant le déploiement du piston du dispositif de déploiement 124, et donc par conséquent de la rampe de projection 121a, 121b, 121c concernée, peut être le fluide nettoyant, par exemple un fluide lave-glace. De la sorte, lorsqu'un nettoyage de l'un des secteurs angulaires est demandé, le moyen d'obturation est ouvert de sorte à permettre l'arrivée du fluide nettoyant dans le dispositif de déploiement 124. Au fur et à mesure que le fluide entre dans le dispositif de déploiement 124, le piston de ce dernier se déplace à l'intérieur du tube dans le sens du déploiement du dispositif. Dès que le fluide rejoint les buses de projection portées par les rampes de projection 121a, 121b, 121c, le nettoyage du secteur angulaire concerné commence. Selon l'agencement des canaux de circulation de liquide au sein du dispositif de déploiement, on comprend que le nettoyage de ce secteur angulaire peut débuter avant que la rampe de projection 121 n'atteigne sa position la plus haute, de sorte que le module de détection 110, et plus particulièrement le secteur angulaire de ce module de détection soit nettoyé sur toute sa hauteur, c'est-à-dire sur toute sa dimension verticale.

Alternativement, ces dispositifs de déploiement 124 peuvent être des dispositifs de déploiement pneumatiques auquel cas l'arrivé de liquide décrite ci-dessus est remplacée par une arrivé d'air comprimé.

Tel que visible sur la figure 3, le module de détection 110 est porté par un support 111 qui comprend au moins une paroi supérieure 112 et une paroi inférieure 113 reliées entre elles par un tronc 114. Tel qu'évoqué ci-dessus, les rampes de projection 121a, 121b, 121c sont mobiles le long d'axes verticaux et des ouvertures 126 sont ménagées dans la paroi supérieure 112 du support 111, ces ouvertures 126 étant configurées pour d'une part recevoir les rampes de projection dans leurs positions escamotées et le passage des dispositifs de déploiement 124 des rampes de projection 121a, 121b, 121c. Avantageusement, ces ouvertures 126 présentent des dimensions identiques, ou sensiblement identiques, aux dimensions des rampes de projection 121a, 121b, 121c de sorte que ces ouvertures 126 sont fermées par les rampes de projection 121a, 121b, 121c lorsque ces dernières sont dans leur première position 221 escamotée. Une de ces ouvertures 126 est ainsi visible sur la figure 3. On comprend que, selon l'invention, autant d'ouvertures 126 sont ménagées dans la paroi supérieure 112 que le système d'aide à la conduite 100 comprend de rampes de projection 121a, 121b, 121c.

Des orifices 119 sont en outre ménagés dans la paroi inférieure 113 de sorte à permettre le maintien des tubes 1240 des dispositifs de déploiement 124. A nouveau, on comprend que le support 111 comprend autant d'orifices 119 que le dispositif de nettoyage comporte de rampes de projection 121a, 121b, 121c.

On note également que le support 111 présente des premiers renforts 115 agencés entre les dispositifs de déploiement 124. Ces premiers renforts 115 comprennent, selon l'exemple illustré ici, au moins deux équerres 116 fixées au tronc 114 du support et porteuses d'une planche 117 ajourée pour être traversée par les tubes des dispositifs de déploiement 124.

Chaque dispositif de déploiement 124 est solidarisé au tronc 114 du support 111 grâce à un moyen de fixation 134 qui lui est propre. Selon l'exemple illustré ici, les moyens de fixation 134 comprennent au moins deux pattes 136 - une seule de ces pattes 136 étant visible pour chaque moyen de fixation 134 illustré ici - configurées pour enserrer le dispositif de déploiement 124 concerné. Alternativement, on pourra par exemple prévoir que les dispositifs de déploiement 124 soient collés, ou vissés sur le tronc 114 du support 111. Il est entendu qu'il ne s'agit que d'exemples de réalisation et que tout autre moyen de fixation est envisageable sans sortir du contexte de l'invention dans la mesure où il permet le maintien du dispositif de déploiement sur le support, ainsi que le déploiement et le repli d'un piston de ce dispositif de déploiement.

La figure 4 illustre enfin, sous forme synoptique un procédé de nettoyage d'un système d'aide à la conduite 100 selon l'invention. Ce procédé comprend ainsi au moins une étape au cours de laquelle une unité de contrôle 200 reçoit une information 201 concernant la présence d'un élément perturbateur sur un secteur angulaire α1, α2, α3, du module de détection 110. On entend ici par « élément perturbateur » un élément qui gêne, voire empêche, l'acquisition d'informations par l'un ou l'autre des secteurs angulaires du module de détection 110. Ainsi, cet élément perturbateur peut par exemple être une salissure, un élément organique, ou tout autre détritus qui pourra se déposer sur ce module de détection 110 et gêner ou empêcher l'acquisition d'images.

L'unité de contrôle envoie une requête au module de détection afin de déterminer si chacun des secteurs angulaires du module de détection est opérationnel. Dans le cas où plusieurs informations issues de différents secteurs angulaires sont envoyées simultanément à l'unité de contrôle, c'est-à-dire que plusieurs secteurs angulaires de la surface optique du module de détection sont sales et nécessitent une opération de nettoyage, un ordre de priorité est prédéterminé de sorte qu'au moins un, avantageusement au moins deux, des secteurs angulaires du module de détection ne soient pas nettoyés immédiatement après qu'une information indiquant la présence d'un élément perturbateur ait été reçue par l'unité de contrôle, mais en décalage par rapport au premier secteur angulaire nettoyé, de manière à rester capables d'acquérir des images, même dans un fonctionnement dégradé. Selon un exemple d'application de l'invention, le nettoyage du secteur angulaire dédiée à l'acquisition d'images de la scène de route située à l'avant du véhicule est prioritaire par rapport au nettoyage des deux autres secteurs angulaires. L'unité de contrôle peut aussi donner instruction de nettoyer ce secteur angulaire dédiée à l'acquisition d'images de la scène de route située à l'avant du véhicule seulement lorsque le véhicule est arrêté (à un feu de croisement par exemple) ou lorsque le véhicule est en roulage en deçà d'une vitesse donnée.

Cette possibilité de piloter quelle partie du module de détection à large surface optique est nettoyée est rendue possible par le fait que chaque rampe de projection est activable indépendamment des autres rampes de projection. L'unité de contrôle 200 est alors programmée pour envoyer une première instruction 202 spécifiquement à la rampe de projection 121a, 121b, 121c, dédiée au nettoyage du secteur angulaire α1, α2, α3, qui a envoyé l'information 201 indiquant la présence d'un élément perturbateur. Cette première instruction 202 permet le déploiement de la rampe de projection 121a, 121b, 121c concernée, c'est-à-dire que cette première instruction 202 entraine plus particulièrement l'ouverture du moyen d'obturation pour permettre l'arrivée de liquide ou d'air comprimé de sorte que le dispositif de déploiement associé puisse se déployer et ainsi amener la rampe de projection 121a, 121b, 121c en regard de la surface à nettoyer. Dans le cas où les dispositifs de déploiement sont déployés grâce au fluide nettoyant, cette première instruction 202 permet à la fois d'engendrer le déploiement de la rampe de projection 121a, 121b, 121c concernée et la projection du fluide nettoyant par les buses de projection de cette rampe de projection 121a, 121b, 121c. En revanche, si ce liquide est différent du fluide nettoyant ou si les dispositifs de déploiement sont des dispositifs pneumatiques, l'unité de contrôle 200 est en outre configurée pour envoyer une deuxième instruction 203 permettant la projection de fluide nettoyant. Par exemple l'envoi de la première instruction 202 et l'envoi de la deuxième instruction 203 peuvent être simultanés.

Une fois le secteur angulaire α1, α2, α3 concerné nettoyé, l'unité de contrôle 200 envoie une troisième instruction entrainant le repli du dispositif de déploiement de la rampe de projection concernée. Autrement dit, la première instruction permet de passer la rampe de projection concernée de sa position escamotée à sa position déployée et la troisième instruction permet quant à elle de passer cette rampe de projection de sa position déployée à sa position escamotée.

La présente invention propose ainsi un moyen simple et peu coûteux permettant le nettoyage séquentiel d'un module de détection d'un système d'aide à la conduite destiné à un véhicule, par exemple un véhicule autonome ou partiellement autonome. Avantageusement, un tel nettoyage séquentiel permet notamment de maintenir en permanence une fonction d'acquisition d'images par le module de détection, au moins sous forme partielle.

La présente invention ne saurait toutefois se limiter aux moyens et configurations décrits et illustrés ici et elle s'étend également à tout moyen ou configuration équivalents et à toute combinaison techniquement opérante des moyens de l'invention tels que définis par les revendications. En particulier la forme, le nombre et la disposition des rampes de projection et de leurs dispositifs de déploiement associés peuvent être modifiés sans nuire à l'invention dans la mesure où ils remplissent les fonctionnalités décrites et illustrées dans le présent document.

## Revendications

1. Dispositif de nettoyage (120) d'un module de détection (110) à large surface optique d'un système d'aide à la conduite (100) d'un véhicule automobile (300), comprenant au moins deux rampes de projection (121a, 121b, 121c) d'un fluide nettoyant agencées autour du module de détection (110) à large surface optique, ledit dispositif de nettoyage (120) présentant une forme générale annulaire avec les rampes de projection (121a, 121b, 121c) qui forment ce dispositif de nettoyage (120) qui présentent chacune une forme de portion d'anneau, chaque rampe de projection (121a, 121b, 121c) étant configurée pour assurer le nettoyage d'une partie de la surface optique du module de détection, chaque rampe de projection étant activable indépendamment des autres rampes de projection (121a, 121b, 121c),
**caractérisé en ce que** chaque rampe de projection (121a, 121b, 121c) est montée sur un dispositif de déploiement télescopique, de manière à pouvoir prendre au moins une première position (221) escamotée et au moins une deuxième position (222) déployée.

2. Dispositif de nettoyage (120) selon l'une quelconque des revendications précédentes, dans lequel chaque rampe de projection (121a, 121b, 121c) comprend au moins deux buses de projection de fluide.

3. Dispositif de nettoyage (120) selon l'une quelconque des revendications précédentes, dans lequel au moins un dispositif de déploiement (124) est un dispositif de déploiement hydraulique.

4. Dispositif de nettoyage (120) selon l'une quelconque des revendications précédentes, dans lequel le passage de la première position escamotée à la deuxième position déployée de chaque rampe de projection (121a, 121b, 121c) est piloté par un dispositif de déploiement (124) qui lui est propre.

5. Dispositif de nettoyage (120) selon l'une quelconque des revendications précédentes, dans lequel le déploiement de chaque dispositif de déploiement (124) est piloté indépendamment du déploiement des autres dispositifs de déploiement (124).

6. Système d'aide à la conduite (100), comprenant au moins un module de détection (110) configuré pour opérer une acquisition d'images selon un champ d'au moins 180° et au moins un dispositif de nettoyage (120) selon l'une quelconque des revendications précédentes, le dispositif de nettoyage (120) étant dédié au nettoyage du module de détection (110) avec chaque rampe de projection du dispositif de nettoyage qui est dédiée au nettoyage d'un secteur angulaire (α1, α2, α3) du module de détection (110).

7. Système d'aide à la conduite (100) selon la revendication précédente, dans lequel tous les secteurs angulaires (α1, α2, α3) du module de détection (110) sont identiques.

8. Système d'aide à la conduite (100) selon l'une quelconque des revendications 6 ou 7, dans lequel au moins un secteur angulaire (α1) du module de détection (110) est dédié à l'acquisition d'images concernant une scène de route se déroulant à l'avant du véhicule auquel est destiné le système d'aide à la conduite (100), ce secteur angulaire (α1) étant centré sur un axe (X) longitudinal d'avancement du véhicule (300).

9. Véhicule automobile (300) comprenant au moins un système d'aide à la conduite (100) selon l'une quelconque des revendications 6 à 8.

10. Procédé de nettoyage d'un système d'aide à la conduite (100) selon l'une quelconque des revendications 6 à 8, comprenant au moins une étape au cours de laquelle une unité de contrôle (200) reçoit une information (201) concernant une demande de nettoyage d'au moins un secteur angulaire (α1, α2, α3) du module de détection (110), au moins une étape au cours de laquelle l'unité de contrôle (200) envoie une requête pour s'assurer que les autres secteurs angulaires du module de détection sont opérationnels, au moins une étape au cours de laquelle l'unité de contrôle (200) renvoie une première instruction (202) permettant de passer la rampe de projection (121a, 121b, 121c) dédiée au nettoyage du secteur angulaire (α1, α2, α3) concerné de sa position (221) escamotée à sa position (222) déployée, au moins une étape au cours de laquelle l'unité de contrôle (200) envoie une deuxième instruction (203) entraînant une projection d'un fluide nettoyant par la rampe de projection (121a, 121b, 121c) concernée et au moins une étape au cours de laquelle l'unité de contrôle (200) envoie une troisième instruction permettant de passer la rampe de projection (121a, 121b, 121c) en question de sa position (222) déployée à sa position (221) escamotée.

## Patentansprüche

1. Vorrichtung zur Reinigung (120) eines Sensormoduls (110) mit großer optischer Fläche eines Fahrerassistenzsystems (100) eines Kraftfahrzeugs (300), die mindestens zwei Spritzrampen (121a, 121b, 121c) für eine Reinigungsflüssigkeit umfasst, die um das Sensormodul (110) mit großer optischer Fläche herum angeordnet sind, wobei die Reinigungsvorrichtung (120) im Wesentlichen eine ringförmige Form mit den Spritzrampen (121a, 121b, 121c) aufweist, die diese Reinigungsvorrichtung (120) bilden und jeweils eine Form eines Ringabschnitts aufweisen, wobei jede Spritzrampe (121a, 121b, 121c) so konfiguriert ist, dass sie die Reinigung eines Teils der optischen Oberfläche des Sensormoduls gewährleistet, wobei jede Spritzrampe unabhängig von den anderen Spritzrampen (121a, 121b, 121c) aktivierbar ist, **dadurch gekennzeichnet, dass** jede Spritzrampe (121a, 121b, 121c) an einer teleskopischen Ausfahrvorrichtung montiert ist, so dass sie mindestens eine erste eingefahrene Position (221) und mindestens eine zweite ausgefahrene Position (222) einnehmen kann.

2. Reinigungsvorrichtung (120) nach einem der vorhergehenden Ansprüche, wobei jede Spritzrampe (121a, 121b, 121c) mindestens zwei Düsen zum Spritzen von Flüssigkeit umfasst.

3. Reinigungsvorrichtung (120) nach einem der vorhergehenden Ansprüche, wobei mindestens eine Ausfahrvorrichtung (124) eine hydraulische Ausfahrvorrichtung ist.

4. Reinigungsvorrichtung (120) nach einem der vorhergehenden Ansprüche, wobei der Übergang von der ersten, eingefahrenen Position zur zweiten, ausgefahrenen Position jeder Spritzrampe (121a, 121b, 121c) durch jeweils eine eigene Ausfahrvorrichtung (124) gesteuert wird.

5. Reinigungsvorrichtung (120) nach einem der vorhergehenden Ansprüche, wobei das Ausfahren jeder Ausfahrvorrichtung (124) unabhängig von dem Ausfahren der anderen Ausfahrvorrichtungen (124) gesteuert wird.

6. Fahrerassistenzsystem (100), das mindestens ein Sensormodul (110) umfasst, das konfiguriert ist, um eine Bilderfassung in einem Feld von mindestens 180° durchzuführen, und mindestens eine Reinigungsvorrichtung (120) nach einem der vorhergehenden Ansprüche, wobei die Reinigungsvorrichtung (120) der Reinigung des Sensormoduls (110) mit jeder Spritzrampe der Reinigungsvorrichtung dient, die der Reinigung eines Winkelsektors (α1, α2, α3) des Sensormoduls (110) dient.

7. Fahrerassistenzsystem (100) nach dem vorhergehenden Anspruch, wobei alle Winkelsektoren (α1, α2, α3) des Sensormoduls (110) identisch sind.

8. Fahrerassistenzsystem (100) nach einem der Ansprüche 6 oder 7, wobei mindestens ein Winkelsektor (α1) des Sensormoduls (110) zur Erfassung von Bildern dient, die eine Straßenszene betreffen, die sich vor dem Fahrzeug abspielt, für das das Fahrerassistenzsystem (100) bestimmt ist, wobei dieser Winkelsektor (α1) auf eine Längsachse (X) der Fortbewegung des Fahrzeugs (300) zentriert ist.

9. Kraftfahrzeug (300), das mindestens ein Fahrerassistenzsystem (100) nach einem der Ansprüche 6 bis 8 umfasst.

10. Verfahren zum Reinigen eines Fahrerassistenzsystems (100) nach einem der Ansprüche 6 bis 8, das mindestens einen Schritt umfasst, in dem eine Steuereinheit (200) eine Information (201) über eine Anforderung zur Reinigung mindestens eines Winkelsektors (α1, α2, α3) des Sensormoduls (110) empfängt, mindestens einen Schritt, in dem die Steuereinheit (200) eine Anfrage sendet, um sicherzustellen, dass die anderen Winkelsektoren des Erfassungsmoduls betriebsbereit sind, mindestens einen Schritt, in dem die Steuereinheit (200) eine erste Anweisung (202) zurücksendet, die es ermöglicht, die Spritzrampe (121a, 121b, 121c) zur Reinigung des betreffenden Winkelsektors (α1, α2, α3) aus ihrer eingefahrenen Position (221) in ihre ausgefahrene Position (222) zu überführen, mindestens einen Schritt, in dem die Steuereinheit (200) eine zweiten Anweisung (203) sendet, die das Ausspritzen einer Reinigungsflüssigkeit aus der betreffenden Spritzrampe (121a, 121b, 121c) bewirkt, und mindestens einen Schritt, in dem die Steuereinheit (200) eine dritte Anweisung sendet, die es ermöglicht, die betreffende Spritzrampe (121a, 121b, 121c) aus ihrer ausgefahrenen Position (222) in ihre eingefahrene Position (221) zu überführen.

## Claims

1. Device (120) for cleaning a large-optical-surface detection module (110) of a driving assistance system (100) of a motor vehicle (300), comprising at least two lines (121a, 121b, 121c) for spraying a cleaning fluid that are arranged around the large-optical-surface detection module (110), said cleaning device (120) having an annular general shape with the spray lines (121a, 121b, 121c) that form this cleaning device (120) each having the shape of a portion of a ring, each spray line (121a, 121b, 121c) being configured to clean a part of the optical surface of the detection module, each spray line being able to be activated independently of the other spray lines (121a, 121b, 121c), **characterized in that** each spray line (121a, 121b, 121c) is mounted on a telescopic deployment device, so as to be able to take up at least one retracted first position (221) and at least one deployed second position (222).

2. Cleaning device (120) according to any of the preceding claims, wherein each spray line (121a, 121b, 121c) comprises at least two fluid spray nozzles.

3. Cleaning device (120) according to any of the preceding claims, wherein at least one deployment device (124) is a hydraulic deployment device.

4. Cleaning device (120) according to any of the preceding claims, wherein the movement of each spray line (121a, 121b, 121c) from the retracted first position to the deployed second position is controlled by a deployment device (124) inherent thereto.

5. Cleaning device (120) according to any of the preceding claims, wherein the deployment of each deployment device (124) is controlled independently of the deployment of the other deployment devices (124).

6. Driving assistance system (100) comprising at least one detection module (110) configured to acquire images in a field of at least 180° and at least one cleaning device (120) according to any one of the preceding claims, the cleaning device (120) being intended to clean the detection module (110) with each spray line of the cleaning device being intended to clean an angular sector (α1, α2, α3) of the detection module (110).

7. Driving assistance system (100) according to the preceding claim, wherein all the angular sectors (α1, α2, α3) of the detection module (110) are identical.

8. Driving assistance system (100) according to either one of Claims 6 and 7, wherein at least one angular sector (α1) of the detection module (110) is intended to acquire images relating to a road scene in front of the vehicle for which the driving assistance system (100) is intended, this angular sector (α1) being centred on a longitudinal axis (X) of forward movement of the vehicle (300) .

9. Motor vehicle (300) comprising at least one driving assistance system (100) according to any one of Claims 6 to 8.

10. Method for cleaning a driving assistance system (100) according to any one of Claims 6 to 8, comprising at least one step in which a control unit (200) receives an item of information (201) relating to a demand for cleaning at least one angular sector (α1, α2, α3) of the detection module (110), at least one step in which the control unit (200) sends a request to check that the other angular sectors of the detection module are operational, at least one step in which the control unit (200) sends a first instruction (202) for moving the spray line (121a, 121b, 121c) intended for cleaning the angular sector (α1, α2, α3) in question from its retracted position (221) to its deployed position (222), at least one step in which the control unit (200) sends a second instruction (203) causing a cleaning fluid to be sprayed by the spray line (121a, 121b, 121c) in question, and at least one step in which the control unit (200) sends a third instruction for moving the spray line (121a, 121b, 121c) in question from its deployed position (222) to its retracted position (221).
